# EUROPEAN PATENT APPLICATION

(11) **EP 3 892 675 A1**
(43) Date of publication of application: **13.10.2021**
(21) Application number: 21166858.7
(22) Date of filing: 02.04.2021
(51) Int. Cl.: C08K 5/00, C08K 5/05, C08K 5/053, C08L 5/08, C09D 105/08

(54) **COMPOSITION BASED ON CHITOSAN RAPIDLY SOLUBLE IN WATER AND METHOD FOR OBTAINING IT**

(30) Priority: 06.04.2020 IT 202000007237
(71) Applicant: Agrilaete S.r.l., 33057 Palmanova (UD) (IT)
(72) Inventor: CERCHIER, Pietrogiovanni, 33057 Palmanova (UD) (IT)
(74) Representative: Di Bernardo, Antonio

(57) **Abstract**

A composition comprising at least a powder and a liquid is disclosed. The powder is a chitosan-based product. The liquid is soluble in water and is not absorbed by the powder in the absence of water at room temperature and ambient pressure. A method for preparing an aqueous solution of a chitosan-based product in which the chitosan-based product is a powder added to a liquid which is soluble in water at room temperature and ambient pressure is also disclosed. The mixture so prepared is added to water and the solution is kept stirred.

## Description

### TECHNICAL FIELD

The present invention relates to a new composition based on chitosan, a polysaccharide which is obtained by treating chitin with basic solutions so as to cause its deacetylation, having an improved solubilization rate in water.

### BACKGROUND

Chitin and its derivatives have shown great potential in the pharmaceutical, biomedical, agricultural, food and textile sectors.

The most interesting of these derivatives is certainly chitosan, a linear polysaccharide composed of D-glucosamine and N-acetyl-D-glucosamine, bound through β(1-4) bonds which is obtained by treating chitin with basic solutions in order to cause its deacetylation.

Among the various applications of chitosan, it is used in agriculture owing to its biodegradability, antimicrobial and biostimulating activity as well as due to its capability to form protective films.

The factor that mostly limits the application of chitosan is the poor solubility in water. It is in fact possible to dissolve chitosan only in acid aqueous solutions. For example, chitosan can be dissolved in solutions of acetic, hydrochloric, formic, nitric, lactic, maleic, malic, phosphoric or succinic acid.

If it is wished to sell a chitosan-based product, dissolution in acids by the consumer is certainly not practical and a product that is readily soluble in water is certainly preferable. The use of an aqueous solution of chitosan has disadvantages.

First of all, a solution more concentrated than 5% is very viscous, which even becomes a gel at concentrations above 10%. For this reason, the sale of solutions can only be done using low concentrations, which implies the handling of large volumes of product with consequent repercussions on economic and environmental costs related to transport.

Moreover, in acid solutions, chitosan tends to degrade over time. In fact, due to an acid hydrolysis phenomenon, the molecular weight of chitosan is progressively reduced and consequently the film-forming properties and viscosity of the product are lost. Furthermore, the reduction of the molecular weight can deteriorate the chitosan to a mix of oligomers (derivatives of chitosan with a molecular weight lower than 5000 Da) which, in agriculture, are very effective as biostimulants, but extremely phytotoxic at high concentrations.

The marketing of chitosan in aqueous solution is therefore risky because, since there is no control over the acid hydrolysis process during the storage period, the product can have unknown characteristics at the time of use.

In order to facilitate the use of the product, many studies have tried to develop a powdered chitosan that is readily soluble in water.

The simplest processes involve the dissolution of chitosan in acids and the subsequent lyophilization of the solution obtained. Depending on the acid used it is thus possible to obtain powders of chitosan acetate, hydrochloride chitosan, chitosan formate, chitosan nitrate, chitosan lactate, chitosan maleate, chitosan phosphate or chitosan succinate.

These powders are soluble in water and able, if properly stored, in particular away from humidity, to keep the main properties of chitosan unaltered for a long time. See in this regard: CN105622778A -Preparation method of water-soluble chitosan; CN1167713C - Preparation of water-soluble chitosan with controllable molecular weight e CN102268103-A Method for preparing chitosan acetate. The problem is that the powders obtained with existing methods, which are actually completely soluble in water, take a long time to dissolve, even in the order of 48 hours.

In particular, if the powders consist of chitosan with medium or high molecular weight (> 100kDa) or with a low deacetylation degree (<85%), their tendency to gel in contact with water makes dissolution very slow.

On the other hand, the length of the chitosan chains (molecular weight) and their tendency to form bonds between them (depending on the deacetylation degree), i.e. the properties that cause this tendency to gel, are also those responsible for the film-forming activity of the product, which is required in some applications and therefore cannot be eliminated.

For example, in the agricultural sector, chitosan is used not only as an elicitor and antimicrobial, but also as a physical barrier to protect leaves from pathogens. The film-forming activity of the product is essential to obtain this barrier.

It is therefore clear that it is not possible to solve the problem of slow dissolution by acting directly on this property, that is, by modifying the powder.

In practice, two types of products are currently available.

A liquid product in which the chitosan is dissolved in an acid aqueous solution (typically as chitosan acetate) and a powdered product based on chitosan that have already treated with acids (generally hydrochloride chitosan).

Of the two products, the powder is preferable not only on account of the lower volume and transport cost (the liquid product has concentrations of the order of 2-3%) but also because the liquid product does not guarantee the same characteristics over time due to the aforementioned acid hydrolysis phenomenon.

### OBJECTS AND SUMMARY OF THE INVENTION

A primary object of this invention is to overcome the drawbacks of the prior art.

In particular, it is an object of the present invention to solve the problem of the slow dissolution in water of powdered chitosan-based products, with the maintenance of the film-forming capacity of the product itself.

These and further objects of the present invention are achieved by means of a composition incorporating a chitosan-based product and a method for preparing an aqueous solution of a chitosan-based product incorporating the characteristics of the accompanying claims, which form an integral part of the present description.

According to a first aspect, the invention is directed to a composition comprising at least a powder and a liquid. The powder is a chitosan-based product, the liquid is soluble in water and is not absorbed by the powder in the absence of water at room temperature and ambient pressure.

In a second aspect, the invention is further directed to a method for preparing an aqueous solution of chitosan in which a chitosan-based powder is added to a liquid which is soluble in water at room temperature and ambient pressure. The mixture so prepared is added to water and the solution is kept stirred.

A further aspect of the present invention relates to the use of the described composition in the agricultural sector. In particular, this use involves dissolving the composition in water and using the solution as foliar application with concentrations of chitosan in 0.05-0.5% solution.

The composition can be marketed in a Kit where the powder and liquid of the composition are together in the same box or where the two components are in separate boxes and are mixed by the user before being combined with water.

### BRIEF DESCRIPTION OF THE DRAWINGS

The invention will be described below with reference to some examples, provided for explanatory and non-limiting purposes, and illustrated in the accompanying drawings.
Figure 1 describes the scheme for dissolving the chitosan-based powder in water.
Figure 2 describes the scheme for dissolving the chitosan-based powder in water using the liquid according to the invention.
Figure 3 shows a photograph relating to a composition which does not work according to the invention using ethylene glycol which, combined with the chitosan-based powder, forms a gel.
Figure 4 shows the photograph of two holm oak leaves (*Quercus ilex*) treated with the composition of the invention and with hydrochloride chitosan, respectively.

### DETAILED DESCRIPTION OF THE INVENTION

As stated above, the invention is directed to a composition comprising at least a powder and a liquid. The powder is a chitosan-based product, while the liquid is soluble in water and is not absorbed by the powder in the absence of water at room temperature and ambient pressure.

The composition of the invention concerns a final product which is rapidly soluble in water and simple to make. Moreover, said final product is not subject to the acid hydrolysis phenomenon which occurs in products containing chitosan in aqueous solution. The composition is obtained by mixing a chitosan-based powder with a liquid that is unable to dissolve it under room temperature and ambient pressure conditions and that is not absorbed for at least 80%, and preferably for at least 90%, by the powder.

The liquid, always under room temperature and ambient pressure conditions, is also easily soluble in water.

In this text, "chitosan-based products" refer to powders of chitosan acetate, hydrochloride chitosan, chitosan formate, chitosan nitrate, chitosan lactate, chitosan citrate, chitosan maleate, chitosan phosphate or chitosan succinate or their mixtures. In a particularly preferred embodiment of the invention, the powder is hydrochloride chitosan, a compound currently registered as a basic substance accepted in agriculture.

Preferably the powder has grains with dimensions lower than 3 mm, and more preferably ranging between 10 and 1000 µm, even more preferably ranging between 30 and 100 microns, so as to have a rapid dissolution thereof.

In the present invention, the expression "the liquid is not absorbed by the powder" means that the liquid in the absence of water, at room temperature and at ambient pressure, does not dissolve the powder and does not form a gel after 30 minutes of stirring in the presence of a magnetic stirrer rotating at 250 rpm.

This means that in the product it is possible to recognise the powder (solid in grains) in the liquid and the liquid as two distinct phases which can therefore be separated again, for example by sedimentation or filtration.

As a liquid, most organic compounds with at least one hydroxyl group are suitable for the application: alcohols (ethyl, methyl, propyl), various glycols (propylene glycol, polyethylene glycol), polyols (glycerol) or their mixtures.

They are in fact able to dissolve in water but under room temperature and ambient pressure conditions they are not significantly absorbed by the chitosan-based powder and do not form gel.

It must be taken into account that the gel is formed instantly as soon as the chitosan powder comes into contact with water, therefore, if the liquid of the invention is added to the water after the powder its addition is completely useless because the gel has already formed. This also occurs with amounts of water of the order of 0.1% in weight of water with respect to chitosan and in fact the powdered chitosan-based product must be stored away from humidity.

An exception is ethylene glycol which is absorbed by the hydrochloride chitosan powder, forming a gel, and therefore is not suitable for the purpose.

Glycerol has the disadvantage of being very viscous (dynamic viscosity >1000 mPas at 20°C) so the product is not very fluid but can still be used. The viscosity of the liquid is an important aspect because it allows the particles of the solid to be held in suspension for a longer time. Alcohols are very low viscous (dynamic viscosity of 0.1-10 mPas at 20 °C) so that the powder in the composition precipitates rapidly.

Therefore, polyethylene glycol (PEG) is preferably used as a liquid which, due to the intermediate viscosity between that of alcohols and glycerol, allows to obtain a product with easy pouring into water. In fact, the product with PEG allows keeping the powder in suspension in the product for a longer time than the alcohols but allows having a more fluid product than that obtained by using glycerol. PEG 200 (dynamic viscosity of 58 - 85 mPas at 20°C) and PEG 400 (dynamic viscosity of 105-130 mPas at 20°C) are particularly preferred. In a preferred aspect of the invention, the viscosity of the liquid ranges between 10 and 150 mPas. In particular, it has been verified that PEG 200, under conditions of room temperature and ambient pressure and in a closed box, is not significantly absorbed by the powder for at least 4 weeks. Advantageously, the percentage in weight of the solid ranges from 20% to 90%, preferably from 30 to 80% by weight and is preferably 50%. The present invention therefore does not intend to limit itself to the use of PEG alone, but the compounds listed above can also be used as liquids. Furthermore, a mixture of these products (for example PEG and alcohols, alcohols and glycerol, etc.) can be added to the powder as a liquid, which mixture has the claimed characteristics: it does not dissolve the chitosan-based powder and is soluble in water. While the invention is susceptible to various modifications and alternative constructions, certain preferred embodiments are shown in the drawings and are described hereinbelow in detail. It is in any case to be noted that there is no intention to limit the invention to the specific embodiment illustrated, rather on the contrary, the invention intends covering all the modifications, alternative and equivalent constructions that fall within the scope of the invention as defined in the claims.

The use of "for example", "etc.", "or" indicates non-exclusive alternatives without limitation, unless otherwise indicated. The use of "includes" means "includes, but not limited to" unless otherwise stated.

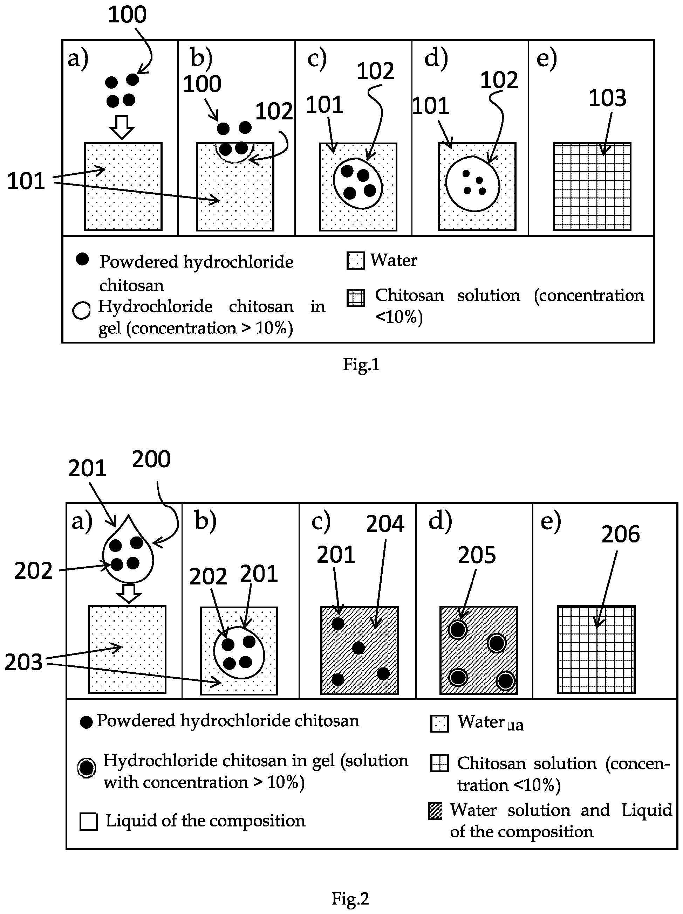

In order to better understand the invention, it is useful to consider the following. The low kinetics of the dissolution of the chitosan-based powder (100) in water (101) is due to the fact that, when the powder 100 is added to the water 101 or vice versa (Fig.1a) the surface of the powder grains forms a hydrogel 102 which binds the powder grains 100 together (Fig. 1b and Fig.1c). The water at this point can take a long time to pass through the hydrogel and hydrate these powder aggregates. These aggregates are in fact protected by the gel barrier 102 which dissolves very slowly (Figld). A reduction in the dimension of the powder particles, being incorporated in the gel, is not effective. Water stirring increases the kinetics of the process but is not decisive, while an increase in temperature is not always possible. Therefore, a long time is required before obtaining the desired solution 103 (Fig. 1e).

According to the invention, however, when the final product 200 of the composition (comprising liquid 201 and powder 202) is added to the water 203 kept stirred (Fig. 2a), it dissolves rapidly because the powder does not gel when it is poured into water: the powder 202 at that moment is in fact covered by the liquid 201 which prevents direct contact with water (Fig. 2b).

Thus, the powder, by not gelling, is dispersed inside the solution 204 of liquid and water (Fig. 2c).

After a few seconds, the liquid that covers the powder dissolves and the grains begin to absorb water (gelling) and also dissolve but, since they are far from each other and dispersed throughout the solution, it is not possible for them to form aggregates (Fig. 2d, wherein the powder grains it gels are indicated with reference 205). The dissolution is thus completed very rapidly forming the desired solution 206 (Fig. 2e). The composition therefore combines a chitosan-based powder, with a tendency to gel in contact with water, a liquid that not only acts as a surfactant but also as a "retarder" of the dissolution of the powder.

The counterintuitive but effective idea is to slow down the dissolution of the powder for the time necessary for it to be well dispersed in water. The liquid, in fact, slows down the hydration of the grains, delaying their contact with water, but the result on the whole is that of considerably speeding up the dissolution of the powder. Experimental tests have shown that a good dissolution of the powder in water is obtained already after 20 minutes, and typically after 10 minutes.

The use of PEG as a liquid also has a further advantage. In fact, once the product has been dissolved in water and applied, it combines well with chitosan to which it is typically added in small percentages to give a plasticising effect.

A further aspect of the invention which makes the powder composition of hydrochloride chitosan and PEG 200 particularly suitable for agricultural use is the fact that a more plastic film adhering to the leaf is obtained.

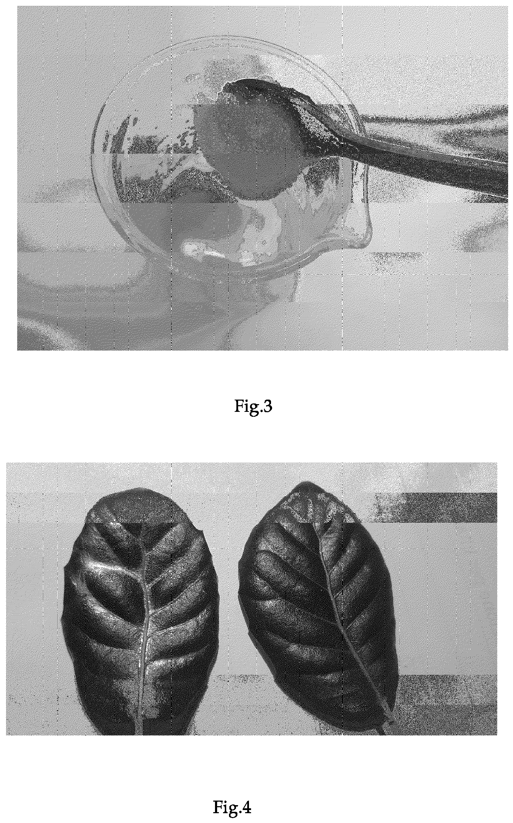

In fact, once both the liquid and the powder of the formulation have been dissolved in water, the PEG is mixed with the chitosan. The solution is then sprayed onto the leaves where the water evaporates. Since the PEG is not very volatile, the resulting film has a high PEG content. The PEG has a plasticising effect on the film, in fact it increases its elongation at break and decreases its elastic modulus. The non-plasticised film is therefore subject to greater tensions and has a lower elongation capacity so that it tends more easily to detach itself from the leaf surface both in the drying phase and following the growth of the leaf (Fig. 4).

Finally, the PEG is already in itself a compound with a biostimulating action for the plant.

In practice, using the solution on the leaf so much so that with PEG and chitosan we have a more adherent, elastic film and both PEG and chitosan are biostimulants, a greater effectiveness of the product is thus obtained.

Finally, the product can be used in agriculture, including organic one, because hydrochloride chitosan is registered as a basic substance (EU No. 1107/2009) and PEG is already used as a co-formulant of various agricultural products having the advantage of being biodegradable and non-toxic.

### EXAMPLES

The invention is illustrated by the following examples which are to be interpreted for illustrating purposes and as not-limiting.

### Example 1

200ml of solution with 0.5% of hydrochloride chitosan prepared according to the prior art with three variants of the composition of the invention were compared.

In particular, four 250ml capacity beakers (Simax®) were prepared and each filled with 200ml of demineralized water (Prim®). The water of each beaker was stirred by means of a magnetic stir bar rotating at 250 rpm for the whole time of the experiment.

1g of powdered hydrochloride chitosan (ChiPro®) with grains ranging in size from 100µm to 500µm was added to the first beaker. In the other beakers, 1g of the same powder of powdered hydrochloride chitosan previously mixed respectively with 1g of PEG 200 (Sigma Aldrich®) in the second one, with 1g of ethyl alcohol (Sigma Aldrich@) in the third one and with a mixture of 0.5g of PEG 200 (Sigma Aldrich@) and 0.5g of ethyl alcohol in the fourth one, were added.

It was thus possible to ascertain that, in the first case the process took 210 minutes whereas in the other three cases the dissolution was completed in 10 minutes.

### Example 2

500g of the composition of the invention formed by 250g of powdered hydrochloride chitosan (ChiPro®) ranging in size from 100µm to 500µm and 250g of PEG 200 (Sigma Aldrich@) were added to 1001 of mains water kept stirred inside the barrel of an atomizer for agricultural use (Piave mod. FUC2000®). It has occurred that the formulation is completely dissolved in 10 minutes.

### Example 3

Some hydrochloride chitosan powder (ChiPro®) was sieved with a 70 mesh (212µm). Two compositions were then prepared in two 100ml capacity beakers.

The first composition is made using the hydrochloride chitosan powder with ethylene glycol the second composition relates to a variant of the composition of the invention.

In particular, 5g of the sieved hydrochloride chitosan powder and 15g of ethylene glycol (Sigma Aldrich@) were mixed in the first beaker and 5g of the sieved hydrochloride chitosan powder and 15g of PEG 200 (Sigma Aldrich@) in the second one.

After 30 minutes the first composition was in the form of a gel, indicating that the glycol had been absorbed by the powder (Fig. 3) while the second composition still exhibited the powder in solid state in a liquid phase. To verify this, the second composition was poured onto the 70 mesh (212µm) sieve and it was found that after 10 minutes 8g of liquid PEG 200 had been separated from the composition. In the product in the gel form, on the other hand, it was not possible to recover the liquid ethylene glycol after sieving.

In addition to being difficult to use because it cannot be poured, the gel is also more difficult to dissolve than the powder. To verify this, 6.5g of the previously prepared gel was added to a 250ml capacity beaker (Simax®) filled with 200ml of demineralized water (Prim®). The water was stirred by a magnetic stir bar rotating at 250 rpm for the whole time of the experiment. In this case the gel took more than 5 hours to dissolve completely.

### Example 4

Several chitosan-based compounds have been prepared: chitosan acetate, chitosan lactate, chitosan formate and chitosan citrate.

To do this, 2.5g of chitosan (Xi'an Pincredit Bio-tech co., Ldt) were placed in 4 beakers in 50ml of deionized water. In each beaker respectively 1.25ml of acetic acid, 5g of citric acid, 2ml of lactic acid and 1ml of formic acid were added.

Once the chitosan had been completely dissolved, the solution was dried in the form of a thin film and ground so as to obtain a chitosan-based powder which could be used for the composition object of the invention. It first occurred that the PEG 200 (Sigma Aldrich®) and ethyl alcohol (Sigma Aldrich®) were not able to dissolve any of the chitosan compounds mentioned.

Using instead the procedure of the invention, the dissolution times as described in table 1 were obtained.

**Table 1**

| | Chitosan acetate (g) | Chitosan Lactate (g) | Chitosan Formate (g) | Chitosan Citrate (g) |
|---|---|---|---|---|
| | 2.5 | 2.5 | 4.0 | 4.5 |
| PEG 200 (g) | 2.5 | | 2.5 | 2.5 |
| Ethyl alcohol (g) | - | 2.5 | - | - |
| Solubilization time (minutes) | 8 | 10 | 9 | 7 |

### Example 5

Two holm oak leaves (*Quercus ilex*) were treated with two chitosan-based formulations (Fig. 4). A 2% aqueous solution of hydrochloride chitosan (ChiPro®) was applied in the left leaf whereas the aqueous solution obtained by dissolving a variant of the composition of the invention which contained 2% of hydrochloride chitosan (ChiPro®) and 2% of PEG 200 (Sigma Aldrich®) was applied in the right leaf. It can be seen that the film without plasticizer is less adherent at the ribs of the leaf.

## Claims

1. Composition comprising at least a powder and a liquid, wherein:
- the powder is a chitosan-based product,
- the liquid is soluble in water and
- the liquid is not absorbed, for at least 80%, by the powder in the absence of water at room temperature and ambient pressure,
wherein the amount of powder has a percentage in weight ranging from 20% to 90%, preferably between 30% and 80%, even more preferably 50%.

2. A composition according to claim 1 wherein the granules of the powder have dimensions lower than 3mm, preferably ranging between 10 and 1000 µm.

3. A composition according to claim 1 wherein the chitosan-based product is a chitosan pre-treated by acids, preferably selected from chitosan acetate, hydrochloride chitosan, chitosan citrate, chitosan formate, chitosan nitrate, chitosan lactate, chitosan maleate, chitosan phosphate, chitosan succinate or carboxymethyl chitosan or their mixtures.

4. A composition according to claim 1 wherein the powdered chitosan-based product is hydrochloride chitosan.

5. A composition according to claim 1 wherein the liquid is an organic compound having at least a hydroxyl group.

6. A composition according to claim 5 wherein the liquid is an alcohol, a glycol (diol), a polyol, or their mixtures.

7. A composition according to claim 5 wherein the liquid is polyethylene glycol having an average molecular weight of 200Da.

8. A composition according to claim 5 wherein the organic compound having at least a hydroxyl has a dynamic viscosity ranging from 0.1 and 1000 mPas at 20°C.

9. A composition according to claim 5 wherein the organic compound having at least a hydroxyl has a dynamic viscosity ranging from 10 and 150 mPas at 20°C.

10. Method for preparing an aqueous solution of a chitosan-based product wherein:
- the product-based chitosan is a powder added to a liquid which is soluble in water at room temperature and ambient pressure,
- the mixture so prepared is added to water and the solution kept stirred.

11. Method according to claim 10 wherein the obtained aqueous solution is used in agricultural sector as foliar application.

12. Use of the composition of claim 1 in agricultural or pharmaceutical sector.

13. Use of the composition of claim 1 in agricultural sector as foliar application.

14. Kit comprising the composition according to any one of claims 1 to 9 wherein the powder and the liquid are together in the same box or are in separate boxes.
